# EUROPÄISCHE PATENTANMELDUNG

(11) **EP 1 394 660 A2**
(43) Veröffentlichungstag der Anmeldung: **03.03.2004**
(21) Anmeldenummer: 03011273.4
(22) Anmeldetag: 17.05.2003
(51) Int. Cl.: G06F 1/16

(54) **Schaltvorrichtung**

(30) Priorität: 27.08.2002 DE 10239157
(71) Anmelder: Lumberg Connect GmbH & Co. KG, 58579 Schalksmühle (DE)
(72) Erfinder: Richter, Michael, 58579 Schalksmühle (DE)
(74) Vertreter: Ostriga, Sonnet, Wirths & Roche

(57) **Zusammenfassung**

Dargestellt und beschrieben ist eine Schaltvorrichtung für ein mindestens schwenkbar um eine Achse angeordnetes Gehäuse eines elektronischen Bauteils, insbesondere Schaltvorrichtung für ein in einem Gerät wie Mobiltelefon, PDA, Palmtop, Laptop od.dgl., schwenkbar angeordnetes Kameramodul, dessen Linse bzw. Sensor in einem um die Achse schwenkbaren Gehäuse angeordnet ist. Erfindungsgemäß ist die Schaltvorrichtung gekennzeichnet durch folgende Merkmale: das Gehäuse ist wenigstens Teil eines von Hand bedienbaren Schwenkorgans zur Schwenkverstellung des Bauteils; das Gehäuse ist zugleich wenigstens Teil des Betätigungsorgans für die Schaltvorrichtung; die Schaltvorrichtung weist einen Kontaktträger auf, der einen mehrere Kontakte umfassenden Kontaktsatz lagert; die Kontakte sind einerseits zur Kontaktierung von Leiterbahnen eines im Gerät vorhandenen Schaltungsträgers eingerichtet; die Kontakte sind andererseits zur Beaufschlagung durch Schaltnocken eingerichtet; der Kontaktträger ist raumfest im Gerät gelagert; und die Schaltnocken sind bewegungseinheitlich mit dem Betätigungsorgan verbunden.

Damit ist eine Schaltvorrichtung geschaffen, die auf einfache Weise mit dem zu betätigenden Bauteil gekuppelt ist, verschleißlose Kontaktbetätigung ermöglicht und sich stark miniaturisiert ausführen lässt.

## Beschreibung

Die Erfindung betrifft eine Schaltvorrichtung für ein mindestens schwenkbar um eine Achse angeordnetes Gehäuse eines elektronischen Bauteils, insbesondere Schaltvorrichtung für ein in einem Gerät wie Mobiltelefon, PDA, Palmtop, Laptop od.dgl., schwenkbar angeordnetes Kameramodul, dessen Linse bzw. Sensor in einem um die Achse schwenkbaren Gehäuse angeordnet ist.

Moderne Mobiltelefone werden in zunehmendem Maße mit Kameras ausgestattet, die entweder als Zusatzgerät an das Telefongehäuse angesteckt werden (Beispiel: Motorola A820) oder aber auch im Telefon integriert sein können. Auch ist inzwischen ein Notebook-Computer vorgestellt worden (SONY Vaio C1MHP), bei dem in der schmalen Frontseite des Deckels eine CCD-Camera eingebaut ist.

Um verschiedene Orientierungen des Kameraauges einstellen zu können, sind die Gehäuse, die die Linse bzw. den Sensor der Kamera enthalten, schwenkbar angeordnet, im Fall des Notebooks um 180° Aufgrund der Schwenkbarkeit der Kamera ist es beispielsweise möglich, sein eigenes Bild zu senden in der Funktion "Webcam" oder etwa eine dem Benutzer gegenüber befindliche Person aufzunehmen. Da beim Drehen der Kamera um 180° das Bild auf den Kopf gestellt würde, muss es elektronisch entsprechend geklappt werden. Hierzu ist ein Schaltvorgang einer Schalteinrichtung erforderlich. Eine primärer Schaltbedarf besteht im übrigen für das Ein- und Ausschalten der Kamera.

Der Erfindung liegt die Aufgabe zugrunde, für die genannten Zwecke, jedoch auch für andere Anwendungen, bei denen ein ein elektronisches Bauteil enthaltendes Gehäuse(teil) verschwenkt oder gedreht wird, eine Schaltvorrichtung zur Verfügung zu stellen, die sich sehr klein gestalten lässt, um problemlos auch in erheblich miniaturisierten Geräten eingebaut werden zu können und die möglichst verschleißarm arbeitet, um einen zuverlässigen Langzeitbetrieb zu gewährleisten.

Die Erfindung löst die Aufgabe im wesentlichen mit den Merkmalen des Anspruchs 1 und ist dem entsprechend gekennzeichnet durch folgende Merkmale:
das Gehäuse ist wenigstens Teil eines insbesondere von Hand bedienbaren Schwenkorgans zur Schwenkverstellung des Bauteils,
das Gehäuse ist zugleich wenigstens Teil des Betätigungsorgans für die Schaltvorrichtung,
die Schaltvorrichtung weist einen Kontaktträger auf, der einen mehrere Kontakte umfassenden Kontaktsatz lagert,
die Kontakte sind einerseits zur Kontaktierung von Leiterbahnen eines im Gerät vorhandenen Schaltungsträgers eingerichtet,
die Kontakte sind andererseits zur Beaufschlagung durch Schaltnocken eingerichtet,
der Kontaktträger ist raumfest im Gerät gelagert, und
die Schaltnocken sind bewegungseinheitlich mit dem Betätigungsorgan verbunden.

Der wesentliche Kern der Erfindung besteht darin, dass zum einen das Gehäuse (oder auch Gehäuseteil) des elektronischen Bauteils zugleich das Bettätigungsglied für die Schaltvorrichtung ist, und zum anderen darin, dass die Kontakte der Schaltvorrichtung durch die mit dem Betätigungsorgan verbundenen Nocken praktisch verschleißfrei betätigt werden und die Schaltvorrichtung keine schleifende Kontakte aufweist.

In weiterer Ausgestaltung der Erfindung ist vorgesehen, dass dem Kontaktträger ein Ringkörper zugeordnet ist, der ein Drehlager für das Betätigungsglied ausbildet. Dabei können Kontaktträger und Ringkörper ein werkstoffeinheitlich-stoffschlüssiges Bauteil ausbilden. Hiermit ist ein Kontaktträger geschaffen, der neben seiner ursprünglichen Funktion der Halterung mindestens eines Kontaktsatzes auch noch eine Lagerfunktion für das dreh - oder schwenkbare Gehäuse/Betätigungsorgan wahrnimmt.

Im Interesse baulicher Einfachheit sieht die Erfindung des weiteren vor, dass die Schaltnocken mit dem Betätigungsorgan werkstoffeinheitlich-stoffschlüssig verbunden sein können.

Eine einfache und kompakte Zuordnung der Schaltvorrichtung zum Schaltungsträger, etwa einer Leiterplatte, des Geräts lässt sich nach einem weiteren Merkmal der Erfindung dadurch erreichen, dass die Kontakte jeweils eine insbesondere seitlich aus dem Kontaktträger austretende, zur Kontaktierung mit dem Schaltungsträger bestimmte Federzunge aufweisen.

Wenigstens einige der Kontakte weisen jeweils einen Schaltabschnitt auf, der außenumfänglich des zugehörigen Schaltnockens positioniert ist, so dass er unmittelbar von diesem beaufschlagt werden kann, was ebenfalls zur Kompaktheit der Schaltvorrichtung beiträgt.

Besonders vorteilhaft ist es, wenn mindestens einer der Kontakte als Brückenkontakt ausgebildet ist. Eine einfache Brückung kann erreicht werden, wenn der Brückenkontakt eine Brückengabel ausbildet, deren Gabelschenkel zur Kontaktierung mit den beiden anderen Kontakten positioniert sind.

Bei einem Kontaktsatz mit z.B. drei Kontakten, von denen einer den Brückenkontakt ausbildet, lassen sich vier Schaltstellungen erzeugen. Als Beispiel: Beide Kontakte nicht gebrückt - Kontakt 1 zu Kontakt 2 gebrückt - Kontakt 2 zu Kontakt 3 gebrückt - Kontakt 1 und Kontakt 3 zu Kontakt 2 gebrückt. In praktischer Ausführung der Erfindung sind mindestens zwei Kontakte vorzusehen; die maximale Anzahl kann je nach den erforderlichen Schaltvorgängen variieren. Es können also auch vier oder mehr Kontakte vorgesehen sein.

Im Sinne der Kompaktheit der Schaltvorrichtung, verbunden mit hoher Kontaktsicherheit und -güte ist ein weiteres Merkmal der Erfindung von Bedeutung, welches darin besteht, dass einige oder alle Kontakte als federnd vorgespannte Kontakte im Kontaktträger angeordnet sind. Zum Kontaktieren reicht schon eine geringe Kraft aus und vor allem auch ein nur sehr kurzer Betätigungshub, um den Kontakt zu betätigen und genügend hohe Kontaktkräfte zu gewährleisten. Aufgrund der Vorspannung sind die Kontaktierungen auch gegen äußere Erschütterungen und Vibrationen unempfindlich.

Um die einzelnen Schaltstellungen bei der Betätigung der Schalteinrichtung sicher zu erreichen und ggf. sie auch haptisch zu signalisieren, ist es vorteilhaft, wenn eine zusätzliche, mit einem Positionsnocken oder einer Positionsraste zusammenwirkende Rastfeder vorgesehen ist. Die Positionsnocken oder -rasten sind mit dem Betätigungsorgan vorzugsweise werkstoffeinheitlich-stoffschlüssig verbunden.

Im übrigen versteht sich die Erfindung am besten aus ihrer nachfolgenden Beschreibung unter Bezugnahme auf in den Zeichnungen dargestelltes Ausführungsbeispiel. Es zeigen:
- Fig. 1: eine perspektivische Darstellung der wesentlichen Teile der Schaltvorrichtung,
- Fig. 2: eine vergrößert dargestellte Einzelheit der Schaltvorrichtung aus Fig. 1 im Anordnungsbereich der Schaltabschnitte der Kontaktfedern,

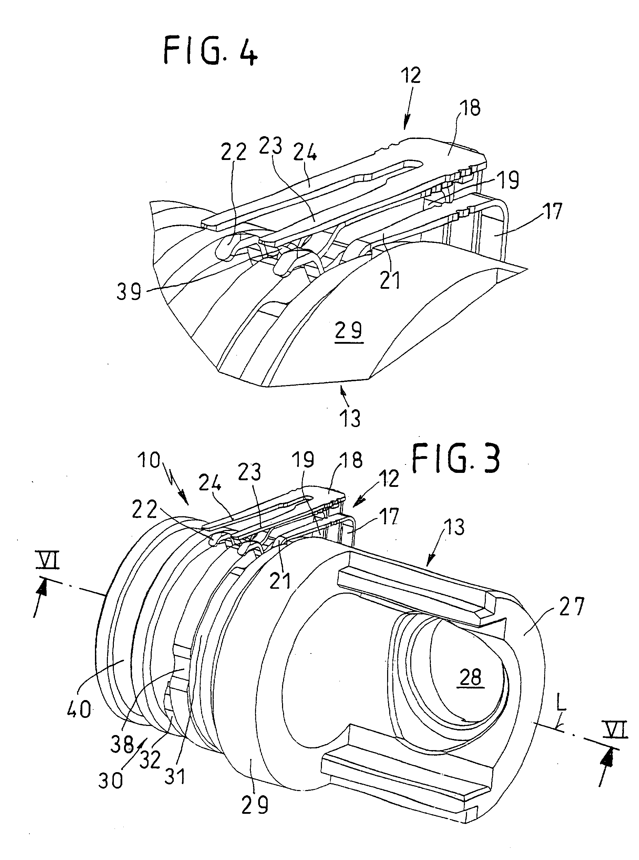

- Fig. 3: eine Fig. 1 entsprechende Darstellung, jedoch im wesentlichen aus der Gegenrichtung gesehen,
- Fig. 4: eine vergrößert dargestellte Einzelheit analog zu Fig. 2, jedoch aus diesem anderen Blickwinkel betrachtet,
- Fig. 5: eine perspektivische Stirnansicht des Kontaktträgers der Schaltvorrichtung mit einem drei Kontakte aufweisenden Kontaktsatz,

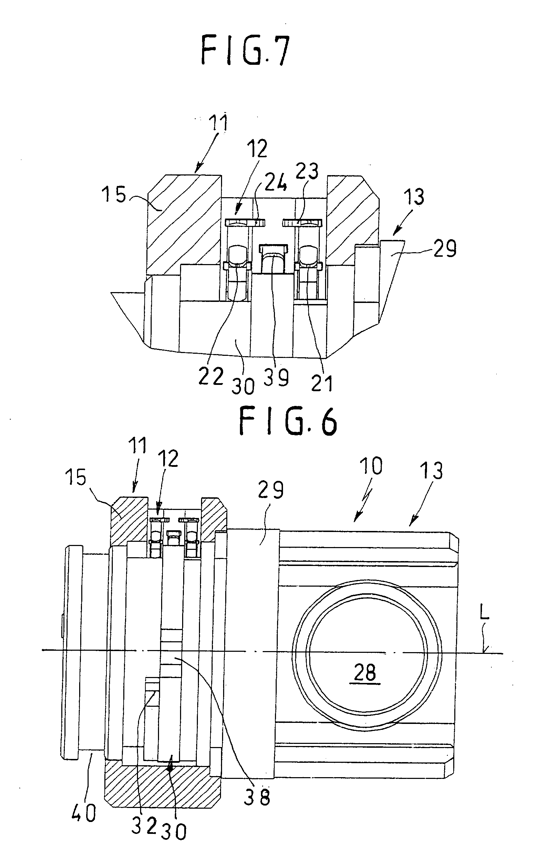

- Fig. 6: einen Längsschnitt durch die Schaltvorrichtung entsprechend der Schnittangabe VI-VI in Fig. 3, und
- Fig. 7: eine vergrößert dargestellte Einzelheit im Anordnungsbereich der Kontakte.

Eine insgesamt mit 10 bezeichnete Schaltvorrichtung umfasst als wesentliche Bauteile einen Kontaktträger 11 mit einem Kontaktsatz 12 sowie ein Schalt-Betätigungsorgan 13.

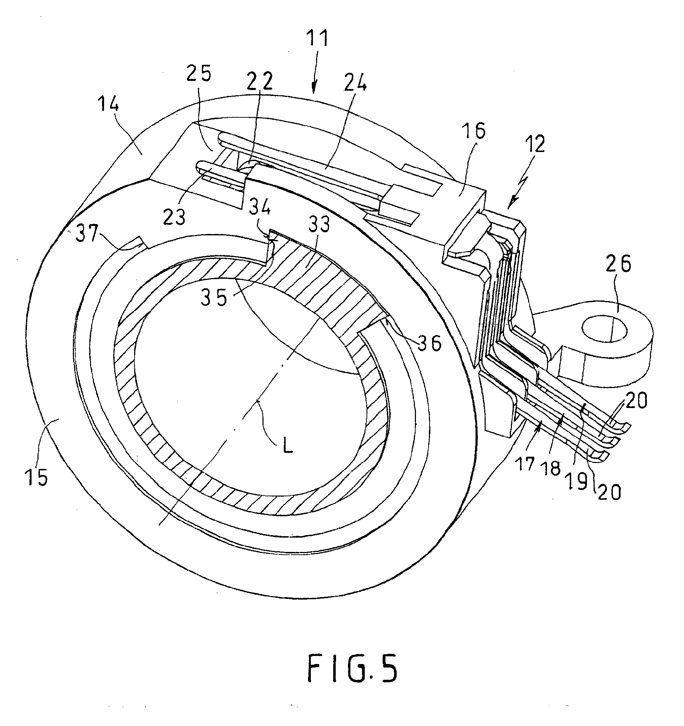

Der Kontaktträger 11, der für sich und vergrößert besonders deutlich in Fig. 5 dargestellt ist, besteht aus einem, in der Regel als Spritzgießteil aus Kunststoff erzeugten Isolierstoffkörper 14, der hier überwiegend in Form eines Ringkörpers 15 vorliegt. Ein mit 16 bezeichneter "Anbau", der jedoch vorzugsweise werkstoffeinheitlich-stoffschlüssig mit dem Ringkörper 15 verbunden ist, lagert die Kontakte des Kontaktsatzes 12. Beim Ausführungsbeispiel umfasst der Kontaktsatz 12 drei Kontakte 17, 18 und 19. Jeder dieser Kontakte 17 bis 19 weist eine Federzunge 20 auf zur Kontaktierung mit Leiterbahnen eines nicht dargestellten Schaltungsträgers in dem Gerät, mit dem die Schaltvorrichtung ausgerüstet. Wie insbesondere Fig. 5 zeigt, sind diese Federzungen 20 beim Ausführungsbeispiel gleich lang, ragen seitlich aus dem Kontaktträger 11 heraus und weisen umgebogene Kontaktierungsenden auf, die alle - wie dargestellt - vorzugsweise in der selben Ebene angeordnet sind.

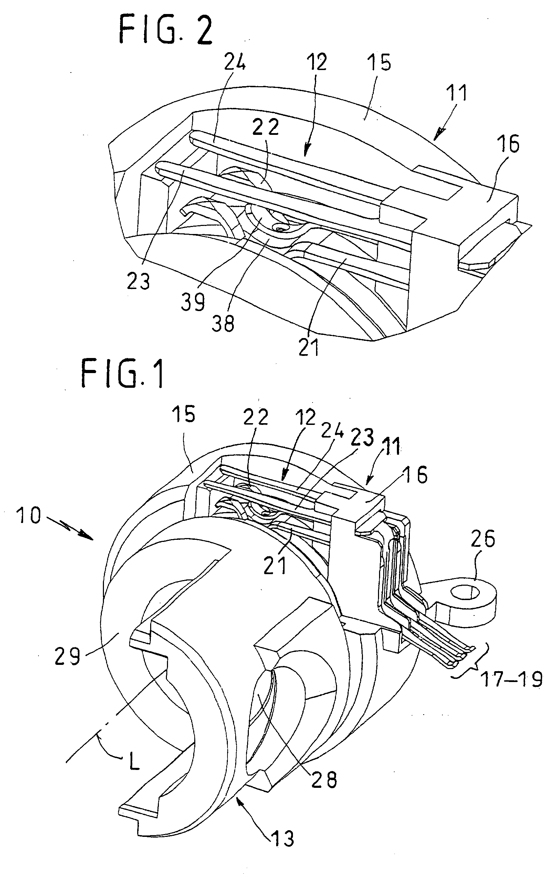

Die beiden äußeren Kontakte 17 und 19 des Kontaktsatzes 12 weisen an ihrem den Federzungen 20 jeweils gegenüberliegenden Ende einen Betätigungs- oder Schaltabschnitt 21 bzw. 22 auf. Der mittlere Kontakt 18 ist als Gabelkontakt ausgebildet. Seine beiden Gabelschenkel 23 und 24 erstrecken sich, wie dies besonders deutlich Fig. 2 zeigt, fluchtend über den Schaltabschnitten 21 und 22 der Kontakte 17 und 19.

Bevorzugt sind sowohl die Schaltabschnitte 21 und 22 der Kontakte 17 und 19 wie auch die Gabelschenkel 23 und 24 des Brückenkontaktes 18 vorgespannt, und zwar mit Bezug z.B. zu Fig. 2 nach unten, also etwa in radialer Richtung auf die Längsachse L der Schalteinrichtung 10 zu. Die freien Enden der Gabelschenkel 23 und 24 stützen sich demnach unter Wirkung der ihr aufgeprägten Federvorspannung auf einer Widerlagerfläche 25 des Kontaktträgers 11 ab.

Zur vollständigen Beschreibung des Kontaktträgers 11 sei noch erwähnt, dass an seinem Isolierstoffkörper 14 ein Montageauge 26 zur Schraub- oder Nietbefestigung des Kontaktträgers 11 im Gerät oder auch auf der Leiterplatte des Geräts mit angeformt ist.

Weiterer wesentlicher Bestandteil der Schaltvorrichtung 10 ist das eingangs erwähnte Betätigungsorgan 13. Bei diesem handelt es sich zugleich um eine Gehäuse oder ein Gehäuseteil 27 für elektronische Bauelemente, die nicht dargestellt sind - beim Ausführungsbeispiel für eine Kamera. In dem Gehäuseteil 27ist eine Kameraöffnung 28 dargestellt, in der die Linse bzw. der CCD-Sensor eingesetzt wird. Im Anordnungsbereich der Kameraöffnung 28 ist das Gehäuse 27 halbschalenartig ausgebildet. Zum Kontaktträger 11 hin ist es weitgehend kreiszylindrisch gestaltet, und zwar ab einer mit 29 bezeichneten Ringschulter. Hinter der Ringschulter 29 hat das Gehäuse 27 einen im wesentlichen zylindrischen Ansatz 30, der zwei Schaltnocken 31 und 32 aufweist.

Der Schaltnocken 31 ist in derselben radialen Ebene vorgesehen wie der Schaltabschnitt 21 der Kontaktfeder 17 und der Schaltnocken 32 in der Ebene des Schaltabschnittes 22 der Kontaktfeder 19. Somit wird deutlich, dass im Falle einer Verschwenkung oder Verdrehung des Gehäuses 27 die drehfest mit diesem verbundenen Nocken 31 und 32 in bestimmten - aufeinander abgestimmten - Winkelbereichen entweder keinen der beiden Schaltabschnitte 21 und 22 der Kontaktfedern 17 und 19 beaufschlagen können oder beide oder entweder den Schaltabschnitt 21 der Kontaktfeder 17 oder den Schaltabschnitt 22 der Kontaktfeder 19.

Werden die Schaltabschnitte 21 und/oder 22 von den zugehörigen Nocken 31 und 32 beaufschlagt, geschieht dies im wesentlichen in radialer Richtung nach außen mit dem Ziel, dass der Schaltabschnitt 21 den Gabelschenkel 23 und/oder der Schaltkontakt 22 den Gabelschenkel 24 des Brückenkontaktes 18 kontaktiert.

Mit den drei beim veranschaulichten Ausführungsbeispiel vorhandenen Kontakten 17, 18 und 19, von denen der Kontakt 18 ein Brückenkontakt ist, lassen sich mithin folgende Schaltzustände erreichen:
- beide Kontakte 17 und 19 nicht gebrückt,
- Kontakt 17 mit Kontakt 18 gebrückt,
- Kontakt 19 mit Kontakt 18 gebrückt,
- Kontakt 17 und Kontakt 19 mit Kontakt 18 gebrückt.

Bei Anwendung der erfindungsgemäßen Schaltvorrichtung auf eine in einem Mobiltelefon oder einem Computer od.dgl. schwenkbar um die Achse L angeordneten Kamera lassen sich also z.B. die wichtigen Positionen AUS, EIN, BILDAUSRICHTUNG NORMAL, BILDAUSRICHTUNG GEKLAPPT schalten.

Diese unterschiedlichen Schaltstellungen würden jeweils bei ungefähr 90° Umfangswinkel-Verstellung stattfinden. In der AUS-Stellung könnte das Kameraauge 28 in das Gerät zeigen, also nach außen hin nicht sichtbar und somit geschützt angeordnet sein. Eine zweite Stellung wäre eine um 90° dazu verdrehte mit Blickrichtung nach vorn. Um weitere 90° könnte die Bildklappung initiieret werden.

Beim Ausführungsbeispiel ist daran gedacht, dass der Umfangswinkel, über den sich das Gehäuse 27 um die Längsachse L der Vorrichtung relativ zum Kontaktträger 11 verdrehen bzw. verschwenken lässt, ungefähr 270° beträgt. Aus Fig. 5 ist zu erkennen, dass am zylindrischen Ansatz 30 des Gehäuseteils 27 ein radial vorstehender Nocken 33 als Anschlag vorgesehen ist. Eine mit 34 bezeichnete erste Flanke einer Umfangsnut im Kontaktträger 11 dient im Zusammenhang mit einer dagegen weisenden Fläche 35 des Kontaktträgers 11 als erster Drehbewegungsanschlag, die gegenüberliegende Flanke 36 mit der mit 37 bezeichneten Gegenfläche als zweiter Endanschlag.

Um eine mechanische Rastung der einzelnen Schaltstellungen zu erreichen, ist noch ein Zusatznocken 38 vorgesehen, der als konvexe Einbuchtung in die Oberfläche des zylindrischen Ansatzes 30 des Gehäuses 27 ausgeformt ist. Dieser Nocken 38 wirkt mit einer zusätzlichen Rastfeder 39 zusammen, die keine elektrische Funktion hat und zwischen den Kontakten 17 und 19 unterhalb des Brückenkontaktes 18 im Bereich zwischen den beiden Schaltabschnitten 21 und 22 der Kontakte 17 und 19 angeordnet ist (besonders deutlich aus Fig. 2 zu erkennen).

Zum abschließenden Verständnis sei noch erwähnt, dass das kontaktträgerseitige Ende des zylindrischen Ansatzes 30 des Gehäuseteils 13 eine außerhalb des Kontaktträgers positionierte Umfangsnut 40 aufweist. Dies Nut 40 dient zur Aufnahme eines Sicherungsrings zur axialen Festlegung zwischen Ansatz 30 und Kontaktträger 11. Für einen Längstoleranzausgleich kann zusätzlich zum Sicherungsring noch ein Wellring in die Nut 40 eingesetzt sein.

## Patentansprüche

1. Schaltvorrichtung (10) für ein mindestens schwenkbar um eine Achse (L) angeordnetes Gehäuse eines elektronischen Bauteils, insbesondere Schaltvorrichtung für ein in einem Gerät wie Mobiltelefon, PDA, Palmtop, Laptop od.dgl., schwenkbar angeordnetes Kameramodul, dessen Linse bzw. Sensor in einem um die Achse (L) schwenkbaren Gehäuse angeordnet ist, **gekennzeichnet durch** folgende Merkmale:
das Gehäuse (13) ist wenigstens Teil eines von Hand bedienbaren Schwenkorgans zur Schwenkverstellung des Bauteils,
das Gehäuse (13) ist zugleich wenigstens Teil des Betätigungsorgans für die Schaltvorrichtung (10),
die Schaltvorrichtung (10) weist einen Kontaktträger (11) auf, der einen mehrere Kontakte (17, 18, 19) umfassenden Kontaktsatz (12) lagert,
die Kontakte (17, 18, 19) sind einerseits zur Kontaktierung von Leiterbahnen eines im Gerät vorhandenen Schaltungsträgers eingerichtet,
die Kontakte (17, 18, 19) sind andererseits zur Beaufschlagung **durch** Schaltnocken (31, 32) eingerichtet,
der Kontaktträger (11) ist raumfest im Gerät gelagert, und
die Schaltnocken (31, 32) sind bewegungseinheitlich mit dem Betätigungsorgan (13) verbunden.

2. Schaltvorrichtung nach Anspruch 1, **dadurch gekennzeichnet, dass** dem Kontaktträger (11) ein Ringkörper (15) zugeordnet ist, der ein Drehlager für das Betätigungsglied (13) ausbildet.

3. Schaltvorrichtung nach Anspruch 2, **dadurch gekennzeichnet, dass** Kontaktträger (11) und Ringkörper (15) ein werkstoffeinheitlich-stoffschlüssiges Bauteil ausbilden.

4. Schaltvorrichtung nach einem der vorhergehenden Ansprüche, **dadurch gekennzeichnet, dass** die Schaltnocken (31, 32) mit dem Betätigungsorgan (13) werkstoffeinheitlich-stoffschlüssig verbunden sind.

5. Schaltvorrichtung nach Anspruch 1, **dadurch gekennzeichnet, dass** die Kontakte (17, 18, 19) jeweils eine insbesondere seitlich aus dem Kontaktträger (11) austretende, zur Kontaktierung mit dem Schaltungsträger bestimmte Federzunge (20) aufweisen.

6. Schaltvorrichtung nach Anspruch 1 oder 5, **dadurch gekennzeichnet, dass** wenigstens einige (17, 19) der Kontakte (17, 18, 19) jeweils einen Schaltabschnitt (21, 22) aufweisen, der außenumfänglich des zugehörigen Schaltnockens (31, 32) positioniert ist.

7. Schaltvorrichtung nach einem der Ansprüche 1 bis 4, **dadurch gekennzeichnet, dass** wenigstens einer (18) der Kontakte (17, 18, 19) als Brückenkontakt ausgebildet ist.

8. Schaltvorrichtung nach einem der Ansprüche 5 bis 7, **dadurch gekennzeichnet, dass** der Kontaktsatz (12) drei Kontaktfedern (17, 18, 19) umfasst, von denen einer (18) den Brückenkontakt ausbildet.

9. Schaltvorrichtung nach Anspruch 7 oder 8, **dadurch gekennzeichnet, dass** der Brückenkontakt (18) eine Brückengabel ausbildet, deren Gabelschenkel (23, 24) zur Kontaktierung mit den beiden anderen Kontakten (17, 19) positioniert sind.

10. Schaltvorrichtung nach einem der Ansprüche 7 bis 9, **dadurch gekennzeichnet, dass** einige oder alle Kontakte (17, 18, 19) als federnd vorgespannte Kontakte im Kontaktträger (11) angeordnet sind.

11. Schaltvorrichtung nach einem der Ansprüche 1 bis 6, **gekennzeichnet durch** eine zusätzliche, mit einem Positionsnocken oder einer Positionsraste (38) zusammenwirkenden Rastfeder (39).

12. Schaltvorrichtung nach Anspruch 11, **dadurch gekennzeichnet, dass** der Positionsnocken oder die Positionsraste (39) mit dem Betätigungsorgan (13) werkstoffeinheitlich-stoffschlüssig verbunden ist.
